# EUROPÄISCHE PATENTSCHRIFT

(11) **EP 3 511 160 B1**
(45) Veröffentlichungstag und Bekanntmachung des Hinweises auf die Patenterteilung: **19.08.2020**
(21) Anmeldenummer: 18210998.3
(22) Anmeldetag: 07.12.2018
(51) Int. Cl.: B32B 7/12, B32B 3/04, B32B 3/06, B32B 3/08, B32B 9/02, B32B 9/04, B32B 21/02, B32B 21/06, B32B 21/08, B32B 27/30, B32B 27/32, B32B 29/00

(54) **VERFAHREN ZUR HERSTELLUNG EINES BELAGSELEMENTS SOWIE BELAGSELEMENT**
METHOD FOR PRODUCING A COVERING ELEMENT AND COVERING ELEMENT
PROCÉDÉ DE FABRICATION D'UN ÉLÉMENT DE REVÊTEMENT ET ÉLÉMENT DE REVÊTEMENT

(30) Priorität: 15.01.2018 DE 102018000289; 20.02.2018 DE 102018001311
(43) Veröffentlichungstag der Anmeldung: 17.07.2019
(73) Patentinhaber: Parador GmbH, 48653 Coesfeld (DE)
(72) Erfinder: Petersen, Frank, 48653 Coesfeld (DE)
(74) Vertreter: Von Rohr Patentanwälte Partnerschaft mbB

(56) Entgegenhaltungen:
- WO-A1-2016/055421
- DE-A1-102008 062 809
- DE-U1- 20 313 661
- DE-U1-202015 007 999

## Beschreibung

Die Erfindung betrifft ein Verfahren zur Herstellung eines Belagselementes, wobei in einen Grundkörper des Belagselementes an wenigstens einem Seitenrand, vorzugsweise an gegenüberliegenden Seitenrändern, des Belagselementes, vorzugsweise korrespondierende, Nut-Feder-Verbindungsgeometrien, insbesondere in Form von Klickverbindungen, eingebracht werden und wobei wenigstens eine elektrisch leitende Funktionsschicht auf einer Auflagefläche des Grundkörpers angeordnet wird.

Zudem betrifft die Erfindung ein Belagselement, vorzugsweise vorgesehen zur Verwendung als Fußboden-, Wand- und/oder Deckenbelag, mit einem Grundkörper und wenigstens einer Funktionsschicht, insbesondere hergestellt nach einem Verfahren der vorgenannten Art, wobei die Funktionsschicht elektrisch leitend ausgebildet ist und wobei der Grundkörper an wenigstens einem Seitenrand, vorzugsweise an gegenüberliegenden Seitenrändern, des Belagselementes, vorzugsweise korrespondierende, Nut-Feder-Verbindungsgeometrien, insbesondere in Form von Klickverbindungen, aufweist.

Die elektrisch leitende Funktionsschicht kann unmittelbar oder mittelbar auf der Auflagefläche des Grundkörpers angeordnet sein bzw. werden, wobei die Funktionsschicht unmittelbar oder mittelbar mit dem Grundkörper verbunden ist.

Die Bereitstellung einer elektrischen Funktionalität durch ein Belagselement ist bereits bekannt. Hierfür sind in der Funktionsschicht funktionale Elemente jeglicher Art je nach gewünschter Funktionalität vorgesehen. Zur Bereitstellung eines Belages mit einer elektrischen Funktionalität durch die Verwendung einer Mehrzahl von Belagselementen sind die Belagselemente untereinander elektrisch kontaktierend verbunden. Im Stand der Technik erfolgt die Kontaktierung über eine Verkabelung der Belagselemente untereinander. Eine solche Verkabelung ist nicht nur kostenintensiv, sondern bei der Verlegung der Belagselemente auch aufwendig zu installieren, da jedes einzelne Belagselement angeschlossen wird.

Des Weiteren sind Belagselemente der vorgenannten Art mit hohen Herstellungskosten sowie einem hohen Aufwand zur Herstellung verbunden.

Die DE 20 2015 007 999 U1 betrifft einen Plattenkörper für einen Boden-, Wand- oder Deckenbelag, für ein Möbel oder eine Fassade, mit einer Trägerplatte und einer oberseitigen Deckschicht oberhalb der Trägerplatte, wobei zwischen der Trägerplatte und der Deckschicht wenigstens eine eine gedruckte Schaltung aufweisende Funktionsschicht zur Energieübertragung von elektrischen Strom an einen externen Verbraucher vorgesehen ist.

Die DE 10 2008 062 809 A1 betrifft einen Einrichtungsgegenstand mit einem Mehrschichtsystem zur Bereitstellung einer elektrischen Funktionalität, das ein Verbundelement und eine Trägerschicht aufweist, wobei das Verbundelement ein Dekoroberflächenlaminat und eine funktionale Schicht aufweist.

Die WO 2016/055421 A1 betrifft ein Deckmaterial zur Nutzung in einer automatischen Bandlegeeinrichtung, welches eine Schicht Verstärkungsmaterial und eine Schicht von leitfähigem Material aufweist, das wiederum in Kontakt mit der verstärkenden Schicht steht.

Die DE 203 13 661 U1 betrifft ein Paneel, welches mit einem zweiten Paneel einen Belag bilden kann.

Aufgabe der vorliegenden Erfindung ist es nun, die Nachteile im Stand der Technik zu vermeiden oder aber zumindest im Wesentlichen zu reduzieren. Insbesondere ist es die Aufgabe der vorliegenden Erfindung ein Verfahren zur Herstellung eines Belagselementes sowie ein Belagselement zur Verfügung zu stellen, welches eine verbesserte elektrische Kontaktierung zwischen unmittelbar benachbarten Belagselementen gewährleistet. Zudem ist es die Aufgabe der vorliegenden Erfindung, ein Verfahren zur Herstellung von Belagselementen bereitzustellen, welches verfahrenstechnisch sehr einfach und damit ökonomisch effektiv durchführbar ist.

Die vorgenannte Aufgabe wird bei einem Verfahren zur Herstellung eines Belagselementes der vorgenannten Art erfindungsgemäß zumindest im Wesentlichen dadurch gelöst, dass die Funktionsschicht derart aufgebracht wird und/oder die Nut-Feder-Verbindungsgeometrie derart in den Grundkörper eingebracht wird, dass wenigstens ein Seitenrand der Funktionsschicht über die Auflagefläche hinausragt, und dass der über die Auflagefläche überstehende Seitenrand der Funktionsschicht auf wenigstens eine Seitenstirnfläche des Grundkörpers umgelegt wird.

Erfindungsgemäß kann eine vereinfachte elektrische Kontaktierung zwischen benachbarten Belagselementen zur Energie- und/oder Datenübertragung gewährleistet werden. Das erfindungsgemäße Verfahren ermöglicht es, ein Belagselement mit einer deutlich verbesserten Kontaktierung bereitzustellen, wobei das Verfahren darüber hinaus wirtschaftlich und ökonomisch effektiv durchgeführt werden kann. So können die Herstellungskosten eines erfindungsgemäßen Belagselementes mit einer elektrisch leitenden Funktionsschicht deutlich reduziert werden, nämlich um bis zu 20 % im Vergleich zum Stand der Technik.

Vorteilhafterweise ist bei den Belagselementen kein zusätzlicher Aufwand bei ihrer Verlegung zur Bereitstellung eines Belages vorhanden, da eine unterseitige Verkabelung der Belagselemente entfallen kann. Erfindungsgemäß erfolgt eine elektrische Kontaktierung zwischen benachbarten Belagselementen im Bereich der Nut-Feder-Verbindungsgeometrien. Die Kontaktierung zwischen unmittelbar benachbarten Belagselementen erfolgt bereits beim Verlegen aufgrund der umgelegten Bereiche der Funktionsschicht. Weiterhin vorteilhaft ist, dass bei Verlegung der Belagselemente die Funktionsschicht weder freiliegt noch sichtbar ist, da eine elektrische Kontaktierung zwischen benachbarten Belagselementen im Bereich ihrer mechanischen Verbindung vorgesehen ist. Der umgelegte Bereich der Funktionsschicht befindet sich an einem Verbindungsbereich an der Seitenstirnfläche des Grundkörpers, an dem der umgelegte Bereich der Funktionsschicht angeordnet und/oder fest mit dem Grundkörper verbunden ist.

Grundsätzlich bestehen verschiedene Möglichkeiten, das Belagselement herzustellen. So kann die Nut-Feder-Verbindungsgeometrie vor Anordnung der Funktionsschicht in dem Grundkörper eingebracht werden. Alternativ oder zusätzlich ist es möglich, die Nut-Feder-Verbindungsgeometrie nach Anordnung der Funktionsschicht auf den Grundkörper in die Längs- und/oder Querkanten des Grundkörpers einzubringen. Vor Umlegen der Funktionsschicht auf die Seitenstirnfläche des Grundkörpers bzw. auf den Verbindungsbereich steht der Seitenrand der Funktionsschicht über die Auflagefläche des Grundkörpers - das heißt der Oberseite des Grundkörpers - über bzw. seitlich von diesem ab. In einem weiteren, nachfolgenden Verfahrensschritt erfolgt das Umlegen der Funktionsschicht. Durch das Umlegen kann über die Anordnung an den Verbindungsbereich eine möglichst große Kontaktierungsfläche der Funktionsschicht sichergestellt werden.

Das mit dem erfindungsgemäßen Verfahren hergestellte Belagselement kann beispielsweise als Laminat und/oder Paneele ausgebildet und alternativ oder zusätzlich zur Verkleidung bzw. als Front für Möbel vorgesehen sein. Weiterhin kann das erfindungsgemäße Belagselement als modularer Boden und/oder Vinylboden eingesetzt werden.

Erfindungsgemäß ist vorgesehen, dass ein mechanisches und elektrisches Verbinden der Längs- und/oder Querkanten des Belagselementes derart erfolgt, dass die elektrische Kontaktierung zum Energie- und/oder Datenaustausch oberseitig des Belagselementes nicht sichtbar ist.

Zudem kann durch das erfindungsgemäße Verfahren verfahrenstechnisch sehr einfach die elektrische Kontaktierung eines Belagselementes gewährleistet werden.

Bei einer besonders bevorzugten Ausführungsform ist oberseitig auf der Funktionsschicht, dem Grundkörper abgewandt, ein wenigstens einlagiger oberer Schichtaufbau aufgebracht. Der obere Schichtaufbau kann über die Auflagefläche des Grundkörpers hinausragen und/oder mit dem Seitenrand des Grundkörpers abschließen. Vorzugsweise ist der obere Schichtaufbau vollflächig auf dem Grundkörper angeordnet und/oder mit der Funktionsschicht verbunden. Weiterhin kann der obere Schichtaufbau mit dem Seitenrand der Funktionsschicht abschließen und/oder die Funktionsschicht kann unter dem oberen Schichtaufbau an wenigstens einem Seitenrand hinausragen. Der obere Schichtaufbau kann vor oder nach Umlegen der Funktionsschicht auf die Funktionsschicht aufgebracht werden. Darüber hinaus kann der obere Schichtaufbau vor oder nach Einbringen der Nut-Feder-Verbindungsgeometrie zumindest mittelbar an dem Grundkörper angeordnet werden. Letztlich versteht es sich, dass der obere Schichtaufbau auch mittelbar an der Funktionsschicht angeordnet sein kann, wobei zwischen der Funktionsschicht und dem oberen Schichtaufbau noch wenigstens eine weitere Schicht, beispielsweise eine Schutzschicht, vorgesehen sein kann. Der obere Schichtaufbau kann gewährleisten, dass im verlegten Zustand des Belagselementes die Funktionsschicht unsichtbar und/oder vollständig durch den oberen Schichtaufbau versiegelt bzw. geschützt ist, da eine Kontaktierung über die Kontaktierungsfläche der Funktionsschicht im Bereich der mechanischen Nut-Feder-Verbindung an den Längs- und/oder Querkanten des Belagselementes vorgesehen ist.

Ein nachträgliches Einbringen der Nut-Feder-Verbindungsgeometrie nach Anordnung der Funktionsschicht und/oder des oberen Schichtaufbaus auf dem Grundkörper wird auch als Unterfräsung bezeichnet. Der obere Schichtaufbau kann mit der Funktionsschicht und dem Grundkörper verpresst und/oder kaschiert werden.

Unter Kaschieren ist in diesem Zusammenhang das Verbinden mehrerer Lagen gleicher oder verschiedener Materialien mittels geeigneter Kaschiermittel, insbesondere Lack, Leim und/oder Wachs, zu verstehen.

Vorzugsweise wird der obere Schichtaufbau gemeinsam mit der Funktionsschicht auf wenigstens eine Seitenstirnfläche des Grundkörpers umgelegt. Bei der Umlegung kann vorgesehen sein, dass die Funktionsschicht mit dem oberen Schichtaufbau an dem Seitenrand der Funktionsschicht abschließt und/oder dass die Funktionsschicht unter dem oberen Schichtaufbau an einer Längs- und/oder Querkante bzw. an wenigstens einem Seitenrand des Grundkörpers hinausragt. Der obere Schichtaufbau kann nach dem Umlegen zumindest mittelbar mit dem Verbindungsbereich der Seitenstirnfläche des Grundkörpers verbunden sein. Insbesondere ist der Verbindungsbereich nicht im Bereich der Nut- und/oder Feder-Geometrie vorgesehen, sondern verläuft bevorzugt zumindest im Wesentlichen senkrecht zur Oberseite des Grundkörpers. Durch das gemeinsame Umlegen mit der Funktionsschicht erfolgt ein oberseitiger Schutz der Funktionsschicht im Bereich der Längs- und/oder Querkante des Belagselementes.

So kann bei einer sogenannten V-Fuge - d. h. einer Anschrägung der Längs- und/oder Querkante des Belagselementes - eine oberseitige Versiegelung der Funktionsschicht im verlegten Zustand des Belagselementes erfolgen. Die Kontaktierungsfläche der Funktionsschicht kann unterhalb der Fuge des Belagselementes vorgesehen sein. Insbesondere kann durch das Umlegen des oberen Schichtaufbaus sichergestellt werden, dass das Belagselement im verlegten Zustand auch im Kantenbereich wasserfest, wasserabweisend und/oder wasserdicht ausgebildet ist. Würde die Funktionsschicht im verlegten Zustand freiliegen, könnte die für den jeweiligen Einsatzzweck benötigte Wasserfestigkeit nicht hinreichend gewährleistet werden.

Zudem ist gemäß einer weiteren bevorzugten Ausgestaltung des Erfindungsgedankens vorgesehen, dass der umlegte oder umzulegende Bereich der Funktionsschicht und/oder des oberen Schichtaufbaus, insbesondere nach dem Umlegen, vorzugsweise schräg, entfernt und/oder abgetragen wird. Letztlich kann der umgelegte oder umzulegende Bereich der Funktionsschicht und/oder des oberen Schichtaufbaus auch zumindest im Wesentlichen vertikal entfernt und/oder abgetragen werden. Unter einem zumindest im Wesentlichen vertikalen Abtrag bzw. einer vertikalen Entfernung ist ein zumindest im Wesentlichen vertikal zur Auflagefläche und/oder zumindest im Wesentlichen parallel zur Seitenstirnfläche vorgesehener Abtrag bzw. Entfernung zu verstehen. Der obere Schichtaufbau kann beispielsweise, vorzugsweise ohne Beschädigung der Funktionsschicht, nach dem Umlegen auf den Verbindungsbereich zumindest teilweise, vorzugsweise vollflächig, entfernt werden. Bevorzugt ist auch nach Abtragung und/oder Entfernung des oberen Schichtaufbaus das Belagselement im verlegten Zustand oberseitig durch den oberen Schichtaufbau geschützt. Darüber hinaus kann auch die Funktionsschicht zumindest randseitig bzw. bereichsweise entfernt und/oder abgetragen werden, so dass die Funktionsschicht sich lediglich an den Verbindungsbereich des Grundkörpers anlegt, jedoch nicht in den Bereich der Nut und/oder der Feder an der Längs- und/oder Querkante des Belagselementes hineinreicht bzw. -ragt. Ein solcher Abtrag der Funktionsschicht kann vorteilhaft sein, sofern der über die Auflagefläche überstehende Seitenrand der Funktionsschicht zu groß bzw. lang gewählt wurde, so dass er über den Verbindungsbereich an der Seitenstirnfläche des Grundkörpers hinausragt. Ein Abtrag und/oder eine Entfernung der Funktionsschicht und/oder des oberen Schichtaufbaus kann durch Fräsen erfolgen. Bei einem schrägen und/oder zumindest im Wesentlichen vertikalen Abtrag des oberen Schichtaufbaus und/oder der Funktionsschicht können die Längs- und/oder Querkanten zueinander korrespondierend schräg und/oder zumindest im Wesentlichen vertikal angefräst werden.

Ein Abtrag der Funktionsschicht und/oder des Schichtaufbaus kann derart erfolgen, dass sich die freiliegende Kontaktierungsfläche der Funktionsschicht ausschließlich im Verbindungsbereich des Grundkörpers befindet. Durch die freiliegende Kontaktierungsfläche ist das Belagselement elektrisch kontaktierend an den Seitenrändern bzw. an wenigstens einem Seitenrand ausgebildet.

Des Weiteren kann ein Leitmittel auf die Funktionsschicht und/oder den oberen Schichtaufbau zumindest abschnittsweise aufgetragen werden. Vorzugsweise wird das Leitmittel auf die, insbesondere durch die Abtragung und/oder Entfernung der Funktionsschicht und/oder des oberen Schichtaufbaus, freigelegten Kontaktierungsflächen der Funktionsschicht aufgetragen. Das Leitmittel kann zur Unterstützung der elektrischen Leitfähigkeit als Verbindemittel vorgesehen sein. Durch die Verwendung eines Leitmittels an den Längs- und/oder Querkanten kann die Leitfähigkeit an diesen Kanten bei Anordnung an ein weiteres Belagselement verbessert werden. Insbesondere wird das Leitmittel im Verbindungsbereich auf die Funktionsschicht aufgebracht. Das Leitmittel kann sich als besonders vorteilhaft zeigen, sofern beim Abtrag bzw. bei Entfernung des oberen Schichtaufbaus die Funktionsschicht zumindest teilweise beschädigt wurde und/oder eine verringerte elektrische Leitfähigkeit aufweist. Darüber hinaus können auch noch Restbestandteile des oberen Schichtaufbaus an der Kontaktierungsfläche der Funktionsschicht - nach Abtrag des oberen Schichtaufbaus - zurückbleiben; ein Leitmittel kann nun zur Verbesserung der elektrischen Leitfähigkeit, insbesondere bei vorhandenen möglichen Unebenheiten auf den abgefrästen Flächen, dienen. Darüber hinaus kann das Leitmittel das Belagselement, insbesondere an den Längskanten bzw. Seitenrändern, vor dem Eindringen von Feuchtigkeit und/oder Wasser schützen und somit im elektrisch kontaktierten Zustand die Belagselemente oberseitig abdichten. Weiterhin ermöglicht das Leitmittel eine ansprechende Optik bei Verlegung des Belagselementes. Zudem kann eine einheitliche Leitfläche über die gesamte Kantenlänge des Belagselementes sichergestellt werden. Darüber hinaus kann das Leitmittel die unter ihm liegende Funktionsschicht schützen und kann insbesondere als Kratzschutz bzw. Schutzschicht angesehen werden. Insbesondere weist das Leitmittel ein Material, das aus der Gruppe ausgewählt ist, die Pulvermetall, Graphit und Ruß beinhaltet, auf. Weiterhin kann das Leitmittel ein Fluor-Polymer-Kunstharz-Material aufweisen. Elektrisch leitfähige Substanzen, Lacke und/oder Tinten sind zur Verwendung als Leitmittel ebenfalls möglich.

Vorzugsweise wird die Funktionsschicht derart auf den Grundkörper aufgebracht, dass wenigstens der umzulegende Bereich zumindest teilweise eine erhöhte Schichtdicke aufweist, insbesondere eine zwischen 1 % bis 110 %, bevorzugt zwischen 10 % und 70 %, vergrößerte Schichtdicke. Der verdickte Bereich der Funktionsschicht kann derart ausgebildet sein, dass er zumindest in wenigstens einem Teilbereich zumindest teilweise mit dem oberen Schichtaufbau entfernt und/oder abgetragen, insbesondere weggefräst, werden kann; und zwar insbesondere derart, dass die elektrische Leitfähigkeit und/oder elektrische Funktionalität weiterhin gewährleistet werden kann.

Der Schichtauftrag der Funktionsschicht kann beispielsweise durch Siebdruck, Tampondruck, Digitaldruck und/oder Bedampfung erfolgen.

Bei einer weiteren bevorzugten Ausgestaltung der Erfindung ist unterseitig, dem oberen Schichtaufbau abgewandt, an dem Grundkörper ein Gegenzug angeordnet. Insbesondere ist der Gegenzug mit dem Grundkörper, vorzugsweise chemisch über ein Klebemittel, verbunden. Als Gegenzug kann ein Papier, vorzugsweise ein Kraftpapier, Kork und/oder eine Kunststoffschicht verwendet werden.

Des Weiteren kann der obere Schichtaufbau eine Dekorfolie, ein Dekorpapier und/oder eine obere Verschleißschicht aufweisen. Die Dekorfolie und/oder das Dekorpapier dienen zur optischen Gestaltung des Belagselementes. Die Verschleißschicht kann derart ausgebildet sein, dass das Belagselement hohen Beanspruchungen standhält. Als Schutzschicht können beispielsweise dünne Papiere verwendet werden, welche insbesondere mit Melamin-Klebstoff getränkt sind und zudem auch Korund zur Erhöhung der Verschleißfestigkeit aufweisen können. Weiterhin sind auch weitere alternative Ausführungsformen der Schutzschicht denkbar, beispielsweise kann die Schutzschicht als bedruckte Folie ausgeführt sein und/oder Polyvinylchlorid, Polypropylen und/oder Polyethylen als Material aufweisen. Zudem kann die Schutzschicht als Vorimprägnat und/oder Durchimprägnat, d. h. also teilweise und/oder vollständig imprägniert und/oder beharzt (mit Harz getränkt), ausgebildet sein. Das Dekorpapier und/oder die Dekorfolie kann/können ein aufgedrucktes Motiv aufweisen. Weiterhin können durch das Dekorpapier oberseitig auf dem Belagselement charakteristische Holzstrukturen als optischer Eindruck erzeugt werden.

Als Grundkörper kann beispielsweise eine MDF- und/oder HDF-Platte verwendet werden. In dem Holzfaserwerkstoff des Grundkörpers können nun in mehreren Fräsvorgängen die zur mechanischen Verbindung der Belagselemente benötigten Nut-Feder-Verbindungsgeometrien eingebracht werden.

Vorzugsweise ist zwischen der Funktionsschicht und dem oberen Schichtaufbau eine, insbesondere isolierende, Schutzschicht eingebracht und/oder angeordnet. Die Schutzschicht kann als Schutzlack und/oder Folie ausgebildet sein. Durch die Trennung der Funktionsschicht und des oberen Schichtaufbaus durch die Schutzschicht ist eine mittelbare Anordnung des oberen Schichtaufbaus auf der Funktionsschicht vorgesehen. Weiterhin kann der obere Schichtaufbau, die Funktionsschicht und die Schutzschicht auf wenigstens eine Seitenstirnfläche des Grundkörpers umgelegt werden. Der obere Schichtaufbau kann demgemäß mittelbar oder unmittelbar mit der Funktionsschicht verbunden sein.

Die Aufgabe der vorliegenden Erfindung kann zudem gemäß einem weiteren Aspekt der vorliegenden Erfindung durch ein eingangs genanntes Belagselement gelöst werden, welches dadurch gekennzeichnet ist, dass die Funktionsschicht auf wenigstens eine Seitenstirnfläche des Grundkörpers im Bereich der Nut-Feder-Verbindungsgeometrie umgelegt ist, so dass das Belagselement elektrisch kontaktierend im Bereich der Nut-Feder-Verbindungsgeometrie ausgebildet ist.

Um unnötige Wiederholungen zu vermeiden, sei auf die zuvor beschriebenen Vorteile und Anwendungsmöglichkeiten des Verfahrens zur Herstellung eines Belagselementes verwiesen, welche in gleicher Weise auch für das erfindungsgemäße Belagselement gelten.

Besonders bevorzugt ist das Belagselement nach einem Verfahren der zuvor genannten Art hergestellt. Des Weiteren versteht es sich, dass bevorzugte Ausführungsformen zur Herstellung eines Belagselementes und zuvor beschriebene Merkmale sich auch auf das erfindungsgemäße Belagselement anwenden lassen, ohne dass dies einer ausdrücklichen Erwähnung bedarf.

Bei einer bevorzugten Ausführungsform des erfindungsgemäßen Belagselementes weist die Funktionsschicht oberseitig, dem Grundkörper abgewandt, einen wenigstens einlagigen oberen Schichtaufbau auf. Insbesondere weist der obere Schichtaufbau eine Dekorfolie, ein Dekorpapier und/oder eine obere Verschleißschicht auf. Der obere Schichtaufbau ist mittelbar mit dem Grundkörper über eine zumindest mittelbare Verbindung zu der Funktionsschicht verbunden. Insbesondere ist der obere Schichtaufbau derart oberhalb der Funktionsschicht angeordnet, dass im verlegten Zustand des Belagselementes die Funktionsschicht oberseitig in dem oberen freiliegenden Bereich des Belagselementes vollständig durch den oberen Schichtaufbau abgedeckt ist. Eine Kontaktierung zwischen benachbarten Belagselementen im verlegten Zustand erfolgt über die freigelegten bzw. freiliegenden Bereiche der Funktionsschicht an den jeweiligen Kontaktierungsflächen. Insbesondere erstreckt sich der obere Schichtaufbau bis in den Fugenbereich des Belagselementes hinein.

Das Belagselement kann unterschiedliche Fugen aufweisen. Beispielsweise kann eine V-Fuge, eine Rundkante und/oder eine Stoßfuge bzw. Glattkante vorgesehen sein. Die Wahl der Fuge wird entsprechend des gewünschten optischen Erscheinungsbildes des Belages und ebenfalls entsprechend des jeweiligen Einsatzzweckes gewählt. Ein oberer Schutz durch den oberen Schichtaufbau stellt insbesondere eine oberseitige Wasserfestigkeit des Belagselementes im verlegten Zustand sicher, so dass insbesondere gewährleistet werden kann, dass bei Benetzung der Oberfläche des Belags kein Wasser in den Bereich der Funktionsschicht dringt, was die elektrische Leitfähigkeit der Funktionsschicht beeinträchtigen könnte.

Bei einer bevorzugten Ausführungsform des Erfindungsgedankens ist die Funktionsschicht im Bereich des umzulegenden Bereichs verbreitert bzw. verdickt ausgebildet und/oder weist eine um bis zu 110 %, bevorzugt zwischen 50 % bis 70 %, vergrößerte Schichtdicke auf. Insbesondere ist der verdickte Bereich der Funktionsschicht derart ausgebildet, dass er zumindest teilweise mit dem oberen Schichtaufbau nach dem Umlegen entfernbar ist; und zwar ohne Beeinträchtigung der elektrischen Leitfähigkeit der Funktionsschicht.

Bevorzugt liegt die Funktionsschicht im Verbindungsbereich frei. Dies bedeutet, dass der obere Schichtaufbau im freiliegenden Bereich der Funktionsschicht nicht mehr oberhalb bzw. auf der Funktionsschicht vorgesehen ist. Aufgrund des Herstellungsverfahrens können noch Reste des oberen Schichtaufbaus zumindest abschnittsweise an der Kontaktierungsfläche der Funktionsschicht vorhanden sein. Wie zuvor erläutert, kann jedoch der obere Schichtaufbau über die Kante des Belagselementes bis in den Verbindungsbereich hineinragen, so dass im verlegten Zustand auch die Fugen benachbarter Belagselemente durch den oberen Schichtaufbau abgedeckt sind. Zumindest abschnittsweise kann jedoch ein freiliegender Bereich der Funktionsschicht im Verbindungsbereich vorgesehen, das heißt als Kontaktierungsfläche der Funktionsschicht ausgebildet sein.

Zudem kann auch zwischen der Funktionsschicht und dem oberen Schichtaufbau eine Schutzschicht, insbesondere eine elektrisch isolierende Schutzschicht, vorzugsweise ein Schutzlack oder eine Folie, angeordnet sein.

Darüber hinaus kann gemäß einer weiteren Ausgestaltung des Erfindungsgedankens vorgesehen sein, dass ein Leitmittel oberhalb der Funktionsschicht und/oder des oberen Schichtaufbaus zumindest abschnittsweise, vorzugsweise im Bereich der elektrischen Kontaktierung und/oder der Kontaktierungsfläche der Funktionsschicht, vorgesehen ist. Demgemäß kann das Leitmittel am Verbindungsbereich des Belagselementes vorgesehen sein. Als Leitmittel sind - wie zuvor bei dem erfindungsgemäßen Verfahren erläutert - unterschiedliche Substanzen möglich, welche jedoch gemein haben können, dass eine elektrische Kontaktierung durch das Leitmittel im Bereich der Kontaktierungsfläche der Funktionsschicht verbessert werden kann.

Vorzugsweise ist unterseitig, dem oberen Schichtaufbau abgewandt, an den Grundkörper ein Gegenzug angeordnet. Der Gegenzug kann, vorzugsweise chemisch über ein Klebemittel, mit dem Grundkörper verbunden sein.

Die Funktionsschicht kann als gedruckte Schaltung ausgebildet sein, eine sogenannte "Printed Intelligence". Letztlich sind auch weitere Methoden denkbar, die Funktionsschicht aufzubringen: Siebdruck, Tampondruck, Digitaldruck und/oder Bedampfung. Zudem können auch weitere elektronische Komponenten, insbesondere ein Prozessor und/oder Kondensator, über die so genannte "Chip on Board"-Technik auf einer Trägerfläche und/oder Folie appliziert werden und/oder aufgebracht worden sein. Unter der "Chip on Board"-Technologie ist ein Verfahren zur Direktmontage von ungehäusten Halbleiter-Chips auf Leiterplatten zu verstehen. Die Funktionsschicht kann ferner elektrisch funktionale Elemente aufweisen, beispielsweise eine Leuchtschicht und/oder Sensoren. Als Sensoren sind beispielsweise Näherungssensoren, Bewegungssensoren, Feuchtigkeitssensoren, Lichtsensoren und/oder Schwingungssensoren möglich. Der jeweilige Sensor kann dazu ausgebildet sein, Feuchtigkeit, die Beleuchtungsstärke, die Raumtemperatur, den Druck, Schwingungen oder dergleichen zu messen. Letztlich kann der Sensor eine physikalische Größe messen. Grundsätzlich wäre als Funktionsschicht auch eine Heizschicht zur Bereitstellung eines beheizbaren Belagselementes denkbar.

Demgemäß kann die Funktionsschicht in situationsangepasster Weise für den jeweiligen Verwendungszweck ausgebildet sein. Erfindungsgemäß ist vorgesehen, dass die Funktionsschicht elektrisch leitend ausgebildet ist. Durch eine elektrische Kontaktierung zwischen benachbarten Belagselementes innerhalb eines Belages kann eine elektrische Funktionalität sich über mehrere Belagselemente erstrecken. Insbesondere können auch die Belagselemente neben Energie Daten bzw. Informationen miteinander austauschen.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1A: ein schematischer Ablauf eines erfindungsgemäßen Verfahrens zur Herstellung eines erfindungsgemäßen Belagselementes,
- Fig. 1B: eine Detailansicht A des erfindungsgemäßen Belagselementes gemäß Fig. 1A,
- Fig. 1C: eine Detailansicht B des erfindungsgemäßen Belagselementes gemäß Fig. 1A,
- Fig. 2: ein schematischer Ablauf einer weiteren Ausführungsform eines erfindungsgemäßen Verfahrens zur Herstellung eines erfindungsgemäßen Belagselements,
- Fig. 3: ein schematischer Ablauf einer weiteren Ausführungsform eines erfindungsgemäßen Verfahrens zur Herstellung eines erfindungsgemäßen Belagselements,
- Fig. 4: ein schematischer Ablauf einer weiteren Ausführungsform eines erfindungsgemäßen Verfahrens zur Herstellung eines erfindungsgemäßen Belagselements,
- Fig. 5: eine schematische Querschnittsansicht von miteinander verbundenen erfindungsgemäßen Belagselementen,
- Fig. 6: eine schematische Querschnittsansicht von verbundenen erfindungsgemäßen Belagselementen gemäß einer weiteren Ausführungsform,
- Fig. 7: eine schematische Querschnittsansicht von verbundenen erfindungsgemäßen Belagselementen gemäß einer weiteren Ausführungsform,
- Fig. 8: eine schematische Darstellung eines Abschnitts einer weiteren Ausführungsform eines erfindungsgemäßen Verfahrens zur Herstellung einer weiteren Ausführungsform eines erfindungsgemäßen Belagselementes,
- Fig. 9: eine schematische Darstellung eines Abschnitts einer weiteren Ausführungsform eines erfindungsgemäßen Verfahrens zur Herstellung einer weiteren Ausführungsform eines erfindungsgemäßen Belagselementes und
- Fig. 10: eine perspektivische schematische Darstellung einer weiteren Ausführungsform eines erfindungsgemäßen Belagselementes.

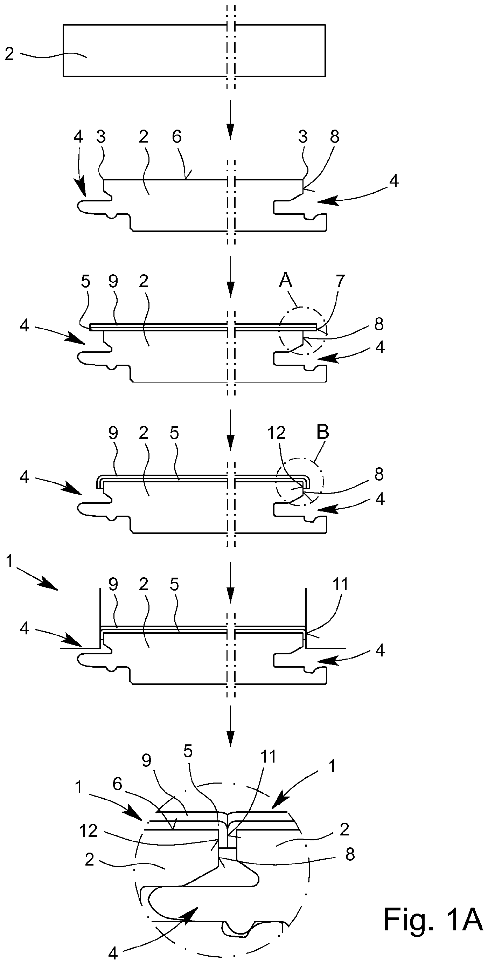

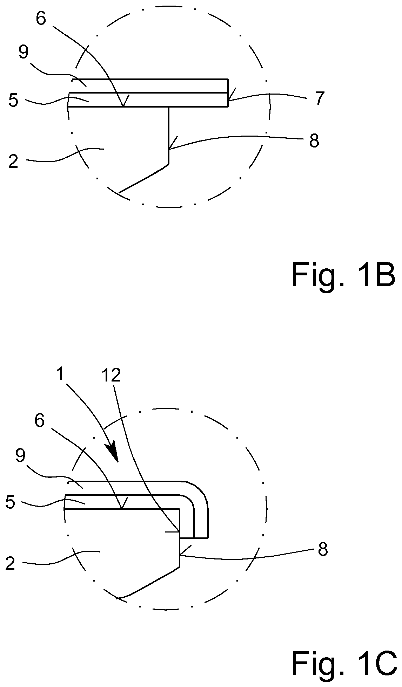

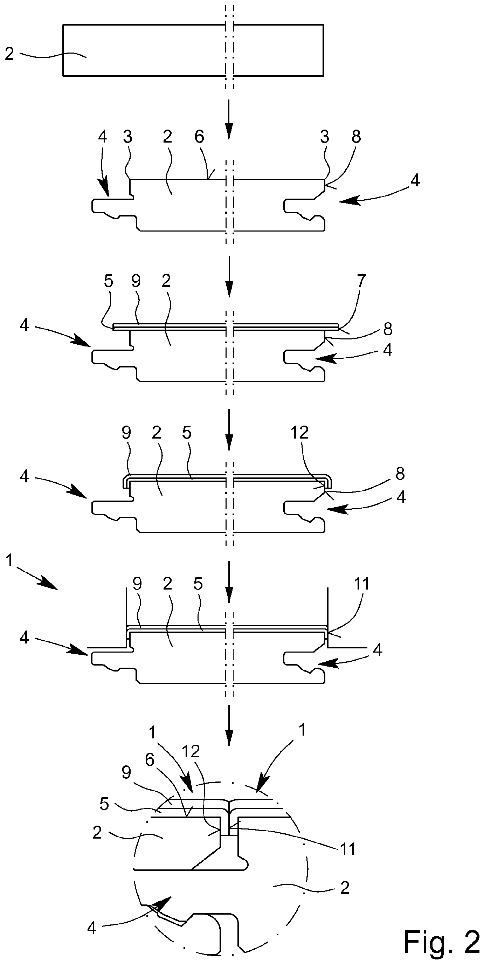

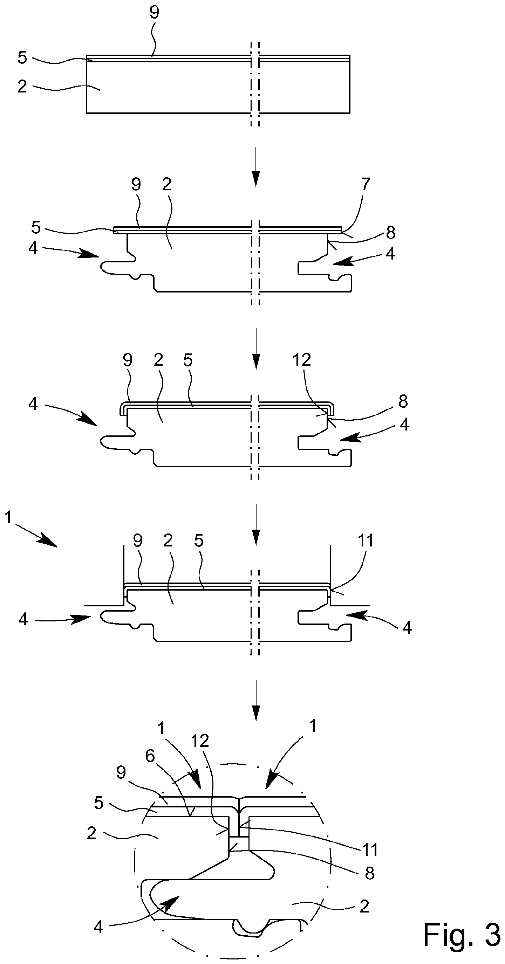

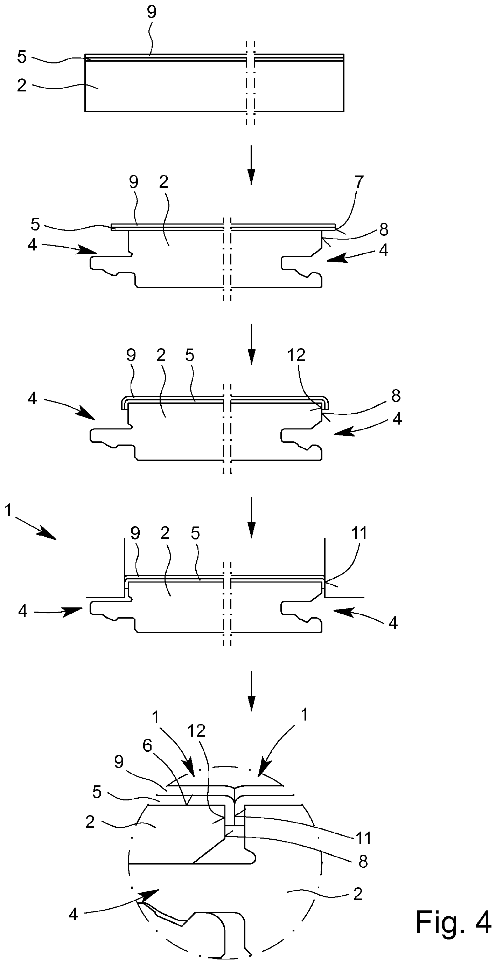

Fig. 1A, 2, 3 und 4 zeigen verschiedene schematische Verfahrensabläufe zur Herstellung eines Belagselementes 1. Die Fig. 1A und 3 zeigen die Querschnittsansichten der Längskante 14 der herzustellenden Belagselemente 1 und die Fig. 2 und 4 die Querschnittsansichten der dazu korrespondierenden Querkanten 13.

Im ersten Schritt der verschiedenen Verfahrensabläufe ist der Grundkörper 2 des Belagselements 1 gezeigt. Die Fig. 1A und 2 zeigen, dass in den Grundkörper bereits die Nut-Feder-Verbindungsgeometrien 4 eingebracht worden sind.

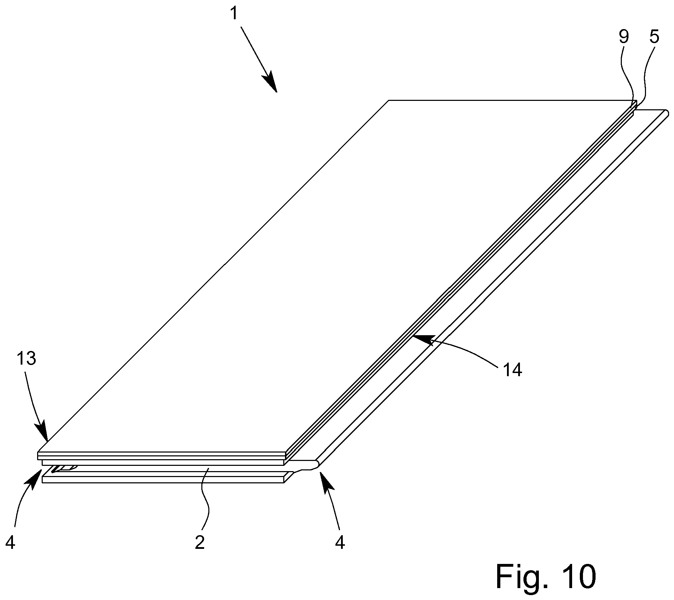

Die Querkante 13 und die Längskante 14 des Belagselementes 1 sind in Fig. 10 gezeigt. Die in Fig. 1A eingebrachten Nut-Feder-Verbindungsgeometrien 4 an der Längskante 14 des Belagselementes 1 sind an wenigstens einem Seitenrand 3, im dargestellten Beispiel an beiden Seitenrändern 3, vorgesehen. Zudem sind sie korrespondierend zueinander ausgebildet, so dass die Belagselemente 1 im verlegten Zustand über Klickverbindungen miteinander verbunden werden können.

Nach Einbringen der Nut-Feder-Verbindungsgeometrien 4 in die Querkante 13 und die Längskante 14 des Belagselementes 1, wie aus den Fig. 1A und 2 ersichtlich, wird die Funktionsschicht 5 in einem weiteren Verfahrensschritt auf eine Auflagefläche 6 des Grundkörpers 2, die die Oberseite darstellt, angeordnet. Die Funktionsschicht 5 wird im dargestellten Ausführungsbeispiel derart aufgebracht, dass wenigstens ein Seitenrand 7 der Funktionsschicht 5 über die Auflagefläche 6 hinausragt. Als nächstes erfolgt in einem weiteren Schritt ein Umlegen der Funktionsschicht 5, und zwar derart, dass der über die Auflagefläche 6 überstehende Seitenrand 7 der Funktionsschicht 5 auf wenigstens eine Seitenstirnfläche 8 des Grundkörpers 2 umgelegt wird. In dem in Fig. 1A und 2 dargestellten Ausführungsbeispiel wird die Funktionsschicht 5 auf beide Seitenränder 3 umgelegt.

Die Fig. 3 und 4 zeigen ein alternatives Vorgehen zur Herstellung des Belagselementes 1. So wird vor Profilierung der Seitenränder 3 des Belagselementes 1 - das heißt vor Einbringen der Nut-Feder-Verbindungsgeometrien 4 - die Funktionsschicht 5 auf die Auflagefläche 6 des Grundkörpers 2 aufgebracht. Anschließend werden in einem nachgelagerten Verfahrensschritt die Nut-Feder-Verbindungsgeometrien 4 derart eingebracht, dass wenigstens ein Seitenrand 7 der Funktionsschicht 5 über die Auflagefläche 6 des Grundkörpers 2 hinausragt. Hierzu wird die Funktionsschicht 5 unterfräst und das Material des Grundkörpers 2 zumindest teilweise unterhalb der Funktionsschicht 5 abgetragen bzw. entfernt. Anschließend erfolgt das Umlegen der Funktionsschicht 5 auf eine Seitenstirnfläche 8 des Grundkörpers 2.

Die Funktionsschicht 5 wird derart auf die Seitenstirnfläche 8 des Grundkörpers 2, die sich oberhalb der Nut und/oder Feder der Nut-Feder-Verbindungsgeometrien 4 an der Seitenrandfläche des Belagselementes 1 befindet, umgelegt, dass sie sich an einen Verbindungsbereich 12 des Grundkörpers 2 an der Seitenstirnfläche 8 anordnet bzw. anlegt. In den dargestellten Ausführungsbeispielen ist die Funktionsschicht 5 fest mit dem Verbindungsbereich 12 verbunden.

Weiterhin ist in den dargestellten Ausführungsformen gezeigt, dass oberseitig auf die Funktionsschicht 5, dem Grundkörper 2 abgewandt, ein wenigstens einlagiger oberer Schichtaufbau 9 derart aufgebracht wird, dass er über die Auflagefläche 6 hinausragt. Nicht dargestellt ist, dass der obere Schichtaufbau 9 auch derart aufgebracht werden kann, dass er mit dem Seitenrand 3 des Grundkörpers 2 abschließt und/oder nicht über die Auflagefläche 6 des Grundkörpers 2 hinausragt. Das Aufbringen des oberen Schichtaufbaus 9 erfolgt in den Verfahrens-abläufen gemäß Fig. 1A, 2, 3 und 4 gemeinsam mit dem Aufbringen der Funktionsschicht 5 auf die Auflagefläche 6 des Grundkörpers 2. Die Funktionsschicht 5 kann, in einem nicht dargestellten Ausführungsbeispiel, vor dem Aufbringen auf die Auflagefläche 6 des Grundkörpers 2 mit dem oberen Schichtaufbau 9 verbunden werden, beispielsweise indem die Funktionsschicht 5 auf eine Trägerschicht des oberen Schichtaufbaus 9 als Schaltung aufgedruckt wird.

Darüber hinaus unterscheidet sich die Längskante 14 von der Querkante 13 in den dargestellten Ausführungsbeispielen, wie aus den Fig. 1A und 2 sowie 3 und 4 ersichtlich, durch die Ausbildung der Nut-Feder-Verbindungsgeometrien 4 sowie, wie in Fig. 10 gezeigt, in ihrer jeweiligen Länge.

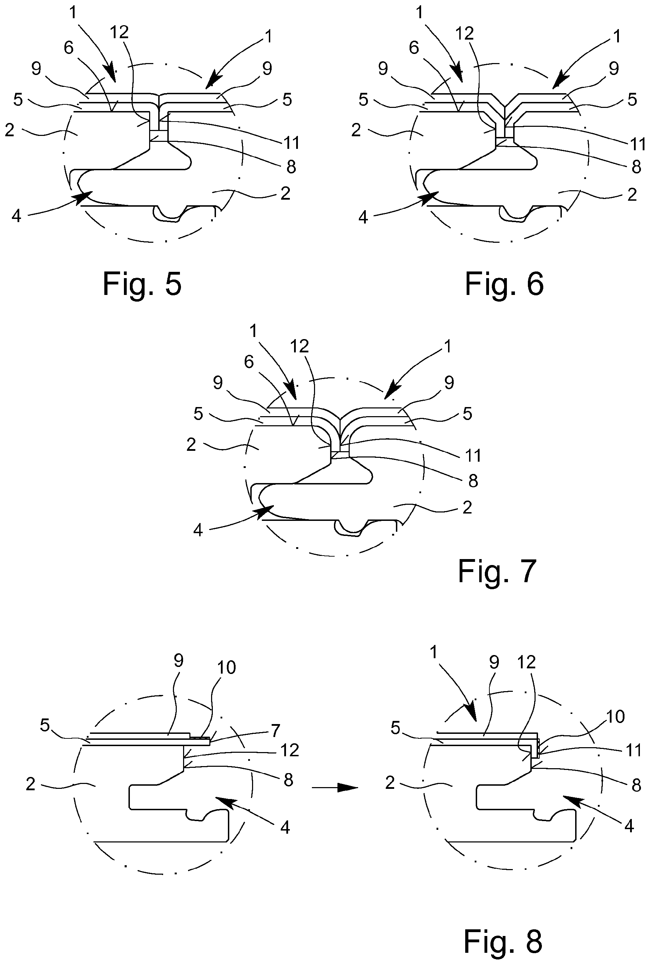

Im Übrigen zeigt Fig. 8, dass der obere Schichtaufbau 9 auch derart aufgebracht werden kann, dass die Funktionsschicht 5 eine größere Länge und/oder Breite als der obere Schichtaufbau 9 aufweist und demgemäß der Seitenrand 7 unter dem oberen Schichtaufbau 9 über die Auflagefläche 6 des Grundkörpers 2 hinausragt. Auch der obere Schichtaufbau 9 steht in dem dargestellten Ausführungsbeispiel über den Seitenrand 3 des Belagselementes 1 über.

Der Seitenrand 3 des Belagselementes 1, über den die Funktionsschicht 5 und der obere Schichtaufbau 9 umgelegt werden, kann unterschiedlich ausgebildet sein. Bei Anordnung bzw. Verbinden von benachbarten Belagselementen 1 untereinander werden zwei Seitenränder 3 der Längskante 14 bzw. der Querkante 13 aneinander angeordnet. Zwischen den Rändern befindet sich jeweils eine Fuge. Hierbei ist es möglich - je nach optischem Erscheinungsbild und je nach Einsatzzweck - unterschiedliche Fugen und/oder Kanten des Belagselementes 1 auszubilden.

Zudem sind in den Fig. 5 bis 7 in einer Querschnitts-Detailansicht unterschiedliche Fugen gezeigt, die sich durch das mechanische Verbinden von zwei Belagselementen 1 ergeben. Weiterhin ist aus den Fig. 5 bis 7 ersichtlich, dass die Seitenränder 3 des Belagselementes 1 unterschiedlich ausgebildet sein können. Fig. 5 zeigt eine sogenannte Stoßfuge bzw. Glattkante, die im verlegten Zustand des Belagselementes 1 eine glatte Oberfläche in den Verbindungsbereichen der Belagselemente 1 vorsieht. In Fig. 6 ist eine sogenannte V-Fuge gezeigt. Die V-Fuge zeichnet sich durch eine schräge Ausbildung und/oder Anfasung des Seitenrandes 3 des Belagselementes 1 aus. Dabei sind die aneinander anzuordnenden Querkanten 13 und/oder Längskanten 14 korrespondierend zueinander angeschrägt bzw. angefast, so dass sich im verlegten Zustand, das heißt bei einer mechanischen Verbindung durch die Nut-Feder-Verbindungsgeometrien 4, eine zumindest im Wesentlichen V-förmige Fuge und demzufolge eine oberseitige Einkerbung im verbundenen Zustand zwischen den Belagselementen 1 ergibt. Als sichtbare Fuge ist weiterhin auch eine sogenannte Rundkante, wie aus Fig. 7 ersichtlich, möglich. Die Rundkante ist derart ausgebildet, dass eine Abrundung des Grundkörpers 2 und des Belagselementes 1 an dem Seitenrand 3 vorgesehen ist.

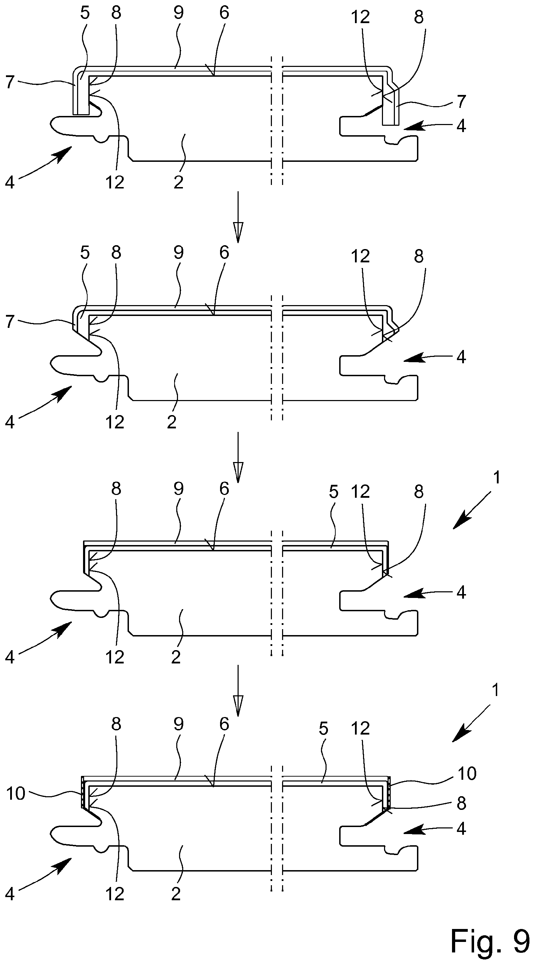

Die Fig. 1A, 2, 3 und 4 zeigen, dass der umgelegte Bereich des oberen Schichtaufbaus 9 in einem dem Umlegen nachgeschalteten Prozessschritt abgetragen bzw. entfernt wird. Ein Abtrag des oberen Schichtaufbaus 9 erfolgt zumindest im Wesentlichen vertikal zur Auflagefläche 6 bzw. parallel zur Seitenstirnfläche 8. In weiteren Ausführungsformen, die an dieser Stelle nicht dargestellt sind, wird der umzulegende Bereich des oberen Schichtaufbaus 9 entfernt bzw. abgetragen. Darüber hinaus ist es denkbar, dass in weiteren Ausführungsformen der umzulegende Bereich der Funktionsschicht 5 end- bzw. randseitig entfernt und/oder abgetragen wird. Die Fig. 9 zeigt, dass die Funktionsschicht 5 nach dem Umlegen zumindest teilweise entfernt und/oder abgetragen wird. In dem dargestellten Ausführungsbeispiel wird zunächst gemeinsam mit der Funktionsschicht 5 der obere Schichtaufbau 9 entfernt. Nach einem schrägen Abtrag der beiden Schichten 5, 9 wird der obere Schichtaufbau 9 im Bereich der Seitenstirnfläche 8 abgetragen. Zudem zeigt die Fig. 9, dass die Funktionsschicht 5 in dem umzulegenden Bereich der Funktionsschicht 5 - demgemäß im späteren Kontaktierungsbereich - eine erhöhte Schichtdicke aufweist. Zusätzlich wird derjenige Bereich der Funktionsschicht 5 abgetragen, der über die Seitenstirnfläche 8 des Grundkörpers 2 hinausragt und somit in die Nut-Feder-Verbindungsgeometrie 4 hineinragt und/oder somit die mechanische Verbindung von zwei Belagselementen 1 beeinträchtigen würde.

Ein Abtrag bzw. eine Entfernung des oberen Schichtaufbaus 9 ist in allen dargestellten Ausführungsbeispielen derart vorgesehen, dass die Funktionsschicht 5 zumindest abschnittsweise im Bereich des Verbindungsbereichs 12 freiliegt und oberseitig nicht mehr durch den oberen Schichtaufbau 9 bedeckt ist. Der obere Schichtaufbau 9 ragt weiterhin noch über den Seitenrand 3 des Belagselementes 1 in den Bereich des Verbindungsbereichs 12 hinein, so dass sich bei Verbinden der Belagselemente 1 untereinander, wie beispielsweise aus den Fig. 5 bis 7 ersichtlich, die oberen Schichtaufbauten 9 unmittelbar benachbarter Belagselemente 1 aneinander anordnen bzw. anschlagen und oberseitig im verbundenen Zustand der Belagselemente 1 die Funktionsschicht 5 versiegeln bzw. abdecken. Weiterhin ist ein unmittelbarer Kontakt der Funktionsschichten 5 im mechanisch verbundenen Zustand von wenigstens zwei Belagselementen 1 zueinander vorgesehen; und zwar derart, dass die Funktionsschichten 5 unmittelbar benachbarter Belagselemente 1 elektrisch kontaktierend miteinander verbunden sind.

Der Abtrag bzw. die Entfernung des oberen Schichtaufbaus 9 ist in den in Fig. 1A, 2, 3 und 4 gezeigten Verfahren vorgesehen. Dieser Verfahrensschritt kann auch als Fräsung bezeichnet werden. Die Fräsung wird dabei derart durchgeführt, dass eine Beschädigung der Funktionsschicht 5 zumindest im Wesentlichen vermieden wird. Grundsätzlich können zumindest abschnittsweise noch Reste des oberen Schichtaufbaus 9 auf der Funktionsschicht 5 im Verbindungsbereich 12 zurückbleiben, die jedoch insbesondere die elektrische Funktionalität der Funktionsschicht 5 nicht beeinflussen.

Zur Verbesserung der elektrischen Leitfähigkeit der Funktionsschicht 5 wird in den in Fig. 9 und 10 gezeigten schematischen Prozessschritten auf die Funktionsschicht 5 ein Leitmittel 10 aufgetragen. In weiteren Ausführungsformen kann auch ein Auftrag des Leitmittels 10 zumindest abschnittsweise auf den oberen Schichtaufbau 9 erfolgen. Das Leitmittel 10 wird, wie aus Fig. 9 ersichtlich, auf die freigelegten Kontaktierungsflächen 11 der Funktionsschicht 5 im Bereich des Verbindungsbereichs 12 aufgebracht. Im verbundenen Zustand der Belagselemente 1 erfolgt eine elektrische Kontaktierung über die Funktionsschichten 5 und die jeweiligen Leitmittel 10. Hierbei kann auch lediglich ein Leitmittel 10 an einer Querkante 13 und/oder Längskante 14 vorgesehen sein, die sich im verbundenen Zustand an die weitere Funktionsschicht 5 des benachbarten Belagselementes 1, die kein Leitmittel 10 aufweist, anlegt.

Das Leitmittel 10 kann auf Berührungsstellen der Funktionsschichten 5 aufgetragen werden und gegebenenfalls mögliche Unebenheiten auf den abgefrästen Flächen des Belagselementes 1 ausgleichen. Das Leitmittel 10 kann eine elektrisch leitfähige Substanz aufweisen und in weiteren Ausführungsformen aus Lacken und/oder Tinten hergestellt werden. Weiterhin kann das Leitmittel 10 ein Fluor-Polymer-Kunstharzmaterial und/oder ein Material aufweisen, welches aus der Gruppe ausgewählt ist, die Pulvermetall, Graphit und Ruß beinhaltet.

Nicht dargestellt ist, dass unterseitig, dem oberen Schichtaufbau 9 abgewandt, an dem Grundkörper 2 ein Gegenzug angeordnet, insbesondere mit dem Grundkörper 2 verbunden wird. Eine Verbindung zu dem Grundkörper 2 kann beispielsweise chemisch über ein Klebemittel erfolgen. Der Gegenzug kann an dem Grundkörper 2 vor oder nach Einbringung der Nut-Feder-Verbindungsgeometrie 4 und in weiteren Ausführungsformen vor der Anordnung der Funktionsschicht 5 und/oder des oberen Schichtaufbaus 9 erfolgen.

Darüber hinaus ist nicht dargestellt, dass der obere Schichtaufbau 9 eine Dekorfolie, ein Dekorpapier und/oder eine obere Verschleißschicht aufweisen kann. Die Dekorfolie und/oder das Dekorpapier kann/können ein optisches Motiv aufweisen, insbesondere zur Erzeugung von charakteristischen Holzstrukturen.

Weiterhin ist nicht dargestellt, dass zwischen der Funktionsschicht 5 und dem oberen Schichtaufbau 9 wenigstens eine weitere Schicht angeordnet sein kann, so dass der obere Schichtaufbau 9 nur mittelbar mit der Funktionsschicht 5 verbunden ist. In weiteren Ausführungsformen kann zwischen der Funktionsschicht 5 und dem oberen Schichtaufbau 9 eine isolierende Schutzschicht, vorzugsweise ein Schutzlack und/oder eine Folie, angeordnet werden.

Fig. 10 zeigt ein Belagselement 1, welches in einem nicht dargestellten Verwendungsbeispiel als Fußboden-, Wand- und/oder Deckenbelag verwendet werden kann. Das in Fig. 10 gezeigte Belagselement 1 weist einen Grundkörper 2 und wenigstens eine Funktionsschicht 5 auf. Zudem kann das Belagselement 1 nach einem Verfahren der zuvor beschriebenen Art hergestellt worden sein. Die Funktionsschicht 5 ist elektrisch leitend ausgebildet. Darüber hinaus weist der Grundkörper 2 an wenigstens einem Seitenrand 3, in dem aus Fig. 10 ersichtlichen Ausführungsbeispiel an allen Seitenrändern 3, des Belagselementes 1 Nut-Feder-Verbindungsgeometrien 4 auf. Die Nut-Feder-Verbindungsgeometrien 4 sind bei gegenüberliegenden Seitenrändern 3 korrespondierend zueinander ausgebildet, so dass die Belagselemente 1 untereinander über Klickverbindungen mechanisch verbindbar sind. Die Funktionsschicht 5 ist auf wenigstens eine Seitenstirnfläche 8 des Grundkörpers 2 im Bereich der Nut-Feder-Verbindungsgeometrie 4 umgelegt, so dass das Belagselement 1 elektrisch kontaktierend im Bereich der Nut-Feder-Verbindungsgeometrie 4 ausgebildet ist. Eine Querschnittsansicht des erfindungsgemäßen Belagselementes 1, die die umgelegte Funktionsschicht 5 zeigt, ist unter anderem in den Fig. 5 bis 7 dargestellt.

Zudem zeigt Fig. 10, dass die Funktionsschicht 5 oberseitig, dem Grundkörper 2 abgewandt, einen wenigstens einlagigen oberen Schichtaufbau 9 aufweist. Nicht dargestellt ist, dass der obere Schichtaufbau 9 eine Dekorfolie, ein Dekorpapier und/oder eine obere Verschleißschicht aufweisen kann.

Die Fig. 5 bis 7 verdeutlichen, dass die Funktionsschicht 5 im Verbindungsbereich 12 des Grundkörpers 2 freiliegt. Demgemäß können sich die Kontaktierungsflächen 11 an den jeweiligen Verbindungsbereichen 12 unmittelbar benachbarter Belagselemente 1 im mechanisch verbundenen Zustand zur elektrischen Kontaktierung aneinander anordnen. Der obere Schichtaufbau 9 ist nicht im Bereich der Kontaktierungsfläche 11 der Funktionsschicht 5 vorgesehen und demgemäß ist der obere Schichtaufbau 9 auch nur teilweise im Verbindungsbereich 12 der Seitenstirnfläche 8 des Grundkörpers 2 vorgesehen. Der obere Schichtaufbau 9 kann über den Seitenrand 3 des Belagselementes 1 umgelegt sein, wie dies die Fig. 5 bis 7 zeigen, so dass die Funktionsschicht 5 im verbundenen Zustand der Belagselemente 1 oberseitig durch den oberen Schichtaufbau 9 geschützt sowie bedeckt ist.

Nicht dargestellt ist, dass zwischen der Funktionsschicht 5 und dem oberen Schichtaufbau 9 eine, insbesondere isolierende, Schutzschicht angeordnet sein kann. Die Schutzschicht kann als Schutzlack und/oder als Folie ausgebildet sein.

Darüber hinaus zeigen die Fig. 8 und 9, dass ein Leitmittel 10 oberhalb der Funktionsschicht 5 vorgesehen ist. In Fig. 9 ist das Leitmittel 10 zumindest teilweise bzw. abschnittsweise auch auf den oberen Schichtaufbau 9 im Bereich der Seitenstirnfläche 8 des Belagselementes 1 aufgetragen. Bei den in Fig. 8 und 9 gezeigten Belagselementen 1 ist das Leitmittel 10 im Bereich der elektrischen Kontaktierung des Belagselementes 1 - das heißt also im Bereich der Kontaktierungsflächen 11 der Funktionsschicht 5 - angeordnet.

Nicht dargestellt ist, dass unterseitig, dem oberen Schichtaufbau 9 abgewandt an dem Grundkörper 2 ein Gegenzug angeordnet sein kann, der in weiteren Ausführungsformen mit dem Grundkörper 2 verbunden ist. Eine Verbindung des Gegenzuges mit dem Grundkörper 2 kann chemisch über ein Klebemittel vorgesehen sein.

### Bezugszeichenliste:

- 1: Belagselement
- 2: Grundkörper
- 3: Seitenrand
- 4: Nut-Feder-Verbindungsgeometrie
- 5: Funktionsschicht
- 6: Auflagefläche
- 7: überstehender Seitenrand
- 8: Seitenstirnfläche
- 9: oberer Schichtaufbau
- 10: Leitmittel
- 11: Kontaktierungsfläche
- 12: Verbindungsbereich
- 13: Querkante
- 14: Längskante

## Patentansprüche

1. Verfahren zur Herstellung eines Belagselementes (1), wobei in einen Grundkörper (2) des Belagselementes (1) an wenigstens einem Seitenrand (3), vorzugsweise an gegenüberliegenden Seitenrändern (3), des Belagselementes (1), vorzugsweise korrespondierende, Nut-Feder-Verbindungsgeometrien (4), insbesondere in Form von Klickverbindungen, eingebracht werden und wobei wenigstens eine elektrisch leitende Funktionsschicht (5) auf einer Auflagefläche (6) des Grundkörpers (2) angeordnet wird,
**dadurch gekennzeichnet,**
**dass** die Funktionsschicht (5) derart aufgebracht wird und/oder die Nut-Feder-Verbindungsgeometrie (4) derart in den Grundkörper (2) eingebracht wird, dass wenigstens ein Seitenrand (7) der Funktionsschicht (5) über die Auflagefläche (6) hinausragt, und dass der über die Auflagefläche (6) überstehende Seitenrand (7) der Funktionsschicht (5) auf wenigstens eine Seitenstirnfläche (8) des Grundkörpers (2) umgelegt wird.

2. Verfahren nach Anspruch 1, **dadurch gekennzeichnet, dass** auf die Funktionsschicht (5) oberseitig, dem Grundkörper (2) abgewandt, vorzugsweise vollflächig, ein wenigstens einlagiger oberer Schichtaufbau (9) aufgebracht wird, insbesondere wobei der obere Schichtaufbau (9) über die Auflagefläche (6) hinausragt.

3. Verfahren nach Anspruch 1 oder 2, **dadurch gekennzeichnet, dass** der obere Schichtaufbau (9) gemeinsam mit der Funktionsschicht (5) auf wenigstens eine Seitenstirnfläche (8) des Grundkörpers (2) umgelegt wird.

4. Verfahren nach einem der vorhergehenden Ansprüche, **dadurch gekennzeichnet, dass** der umgelegte oder umzulegende Bereich der Funktionsschicht (5) und/oder des oberen Schichtaufbaus (9), insbesondere nach dem Umlegen randseitig entfernt und/oder abgetragen wird.

5. Verfahren nach einem der vorhergehenden Ansprüche, **dadurch gekennzeichnet, dass** ein Leitmittel (10) auf die Funktionsschicht (5) und/oder den oberen Schichtaufbau (9) zumindest abschnittsweise aufgetragen wird, insbesondere auf die freigelegten Kontaktierungsflächen (11) der Funktionsschicht (5).

6. Verfahren nach einem der vorhergehenden Ansprüche, **dadurch gekennzeichnet, dass** unterseitig, dem oberen Schichtaufbau (9) abgewandt, an dem Grundkörper (2) ein Gegenzug angeordnet wird, insbesondere mit dem Grundkörper (2), vorzugsweise chemisch über ein Klebemittel, verbunden wird.

7. Verfahren nach einem der vorhergehenden Ansprüche, **dadurch gekennzeichnet, dass** zwischen der Funktionsschicht (5) und dem oberen Schichtaufbau (9) eine, vorzugsweise isolierende, Schutzschicht, vorzugsweise ein Schutzlack und/oder eine Folie, eingebracht und/oder angeordnet wird.

8. Belagselement (1), vorzugsweise vorgesehen zur Verwendung als Fußboden-, Wand- und/oder Deckenbelag, mit einem Grundkörper (2) und wenigstens einer Funktionsschicht (5), insbesondere hergestellt nach einem Verfahren nach einem der vorhergehenden Ansprüche, wobei die Funktionsschicht (5) elektrisch leitend ausgebildet ist und wobei der Grundkörper (2) an wenigstens einem Seitenrand (3), vorzugsweise an gegenüberliegenden Seitenrändern (3), des Belagselementes (1), vorzugsweise korrespondierende, Nut-Feder-Verbindungsgeometrien (4), insbesondere in Form von Klickverbindungen, aufweist,
**dadurch gekennzeichnet,**
**dass** die Funktionsschicht (5) auf wenigstens eine Seitenstirnfläche (8) des Grundkörpers (2) im Bereich der Nut-Feder-Verbindungsgeometrie (4) umgelegt ist, so dass das Belagselement (1) elektrisch kontaktierend im Bereich der Nut-Feder-Verbindungsgeometrie (4) ausgebildet ist.

9. Belagselement nach Anspruch 8, **dadurch gekennzeichnet, dass** die Funktionsschicht (5) oberseitig, dem Grundkörper (2) abgewandt, einen wenigstens einlagigen oberen Schichtaufbau (9) aufweist, insbesondere wobei der obere Schichtaufbau (9) eine Dekorfolie, ein Dekorpapier und/oder eine obere Verschleißschicht aufweist.

10. Belagselement nach Anspruch 8 oder 9, **dadurch gekennzeichnet, dass** die Funktionsschicht (5) in einem Verbindungsbereich (12) der Seitenstirnfläche (8), insbesondere außerhalb der Nut-Feder-Verbindungsgeometrie (4), freiliegt.

11. Belagselement nach einem der vorhergehenden Ansprüche, **dadurch gekennzeichnet, dass** ein Leitmittel (10) oberhalb der Funktionsschicht (5) und/oder des oberen Schichtaufbaus (9) zumindest abschnittsweise, vorzugsweise im Bereich der elektrischen Kontaktierung des Belagselementes (1), vorgesehen ist.

## Claims

1. Method for manufacturing a covering element (1), wherein into a main body (2) of the covering element (1), on at least one side edge (3), preferably on opposite side edges (3), of the covering element (1), preferably corresponding tongue-and-groove connection geometries (4), in particular in the form of click connections, are provided and wherein at least one electrically conductive functional layer (5) is arranged on a seating surface (6) of the main body (2),
**characterized in that**
the functional layer (5) is applied in such a way and/or the tongue-and-groove connection geometry (4) is provided into the main body (2) in such a way that at least one side edge (7) of the functional layer (5) projects beyond the seating surface (6), and **in that** the side edge (7) of the functional layer (5) projecting beyond the seating surface (6) is folded over at least one side end face (8) of the main body (2).

2. Method according to claim 1, **characterized in that** on the top side of the functional layer (5), facing away from the main body (2), preferably over the entire surface, an at least single-layer upper layer structure (9) is applied, in particular wherein the upper layer structure (9) projects beyond the seating surface (6).

3. Method according to claim 1 or 2, **characterized in that** the upper layer structure (9) is folded over onto at least one side end face (8) of the main body (2) together with the functional layer (5).

4. Method according to one of the preceding claims, **characterized in that** the folded-over or to be folded-over region of the functional layer (5) and/or of the upper layer structure (9) is removed and/or ablated at the edge, in particular after the folding over.

5. Method according to one of the preceding claims, **characterized in that** a conducting means (10) is applied onto the functional layer (5) and/or the upper layer structure (9) at least in sections, in particular onto the exposed contacting surfaces (11) of the functional layer (5).

6. Method according to one of the preceding claims, **characterized in that** on a lower side, facing away from the upper layer structure (9), a backing is arranged on the main body (2), in particular is connected to the main body (2), preferably chemically via an adhesive means.

7. Method according to one of the preceding claims, **characterized in that** a, preferably insulating, protective layer, preferably a protective lacquer and/or a film, is provided and/or arranged between the functional layer (5) and the upper layer structure (9).

8. Covering element (1), preferably intended for use as a floor, wall and/or ceiling covering, having a main body (2) and at least one functional layer (5), in particular manufactured according to a method according to one of the preceding claims, wherein the functional layer (5) is designed to be electrically conductive and wherein the main body (2) comprises on at least one side edge (3), preferably on opposite side edges (3), of the covering element (1), preferably corresponding tongue-and-groove connection geometries (4), in particular in the form of click connections,
**characterized in that**
the functional layer (5) is folded over at least one side end face (8) of the main body (2) in the region of the tongue-and-groove connection geometry (4), so that the covering element (1) is designed to make electrical contact in the region of the tongue-and-groove connection geometry (4).

9. Covering element according to claim 8, **characterized in that** the functional layer (5) comprises on the upper side, facing away from the main body (2), an at least single-layer upper layer structure (9), in particular wherein the upper layer structure (9) comprises a decorative foil, a decorative paper and/or an upper wear layer.

10. Covering element according to claim 8 or 9, **characterized in that** the functional layer (5) is uncovered in a connecting region (12) of the side end face (8), in particular outside the tongue-and-groove connection geometry (4).

11. Covering element according to one of the preceding claims, **characterized in that** a conducting means (10) is provided above the functional layer (5) and/or the upper layer structure (9) at least in sections, preferably in the area of the electrical contacting of the covering element (1).

## Revendications

1. Procédé de fabrication d'un élément de recouvrement (1), dans lequel dans un corps de base (2) de l'élément de recouvrement (1), sur au moins un bord latéral (3), de préférence sur des bords latéraux opposés (3) de l'élément de recouvrement (1), sont prévues des géométries de liaison à rainure et languette (4) de préférence correspondantes, en particulier sous la forme de liaisons à encliquetage, et dans lequel au moins une couche fonctionnelle (5) conductrice de l'électricité est disposée sur une surface d'appui (6) du corps de base (2),
**caractérisé en ce que**
la couche fonctionnelle (5) est appliquée de telle manière et/ou la géométrie de liaison à rainure et languette (4) est prévue dans le corps de base (2) de telle manière qu'au moins un bord latéral (7) de la couche fonctionnelle (5) dépasse de la surface d'appui (6), et **en ce que** le bord latéral (7) de la couche fonctionnelle (5) dépassant de la surface d'appui (6) est replié sur au moins une face frontale latérale (8) du corps de base (2).

2. Procédé selon la revendication 1, **caractérisé en ce que** sur la face supérieure de la couche fonctionnelle (5), opposée au corps de base (2), de préférence sur toute la surface, une structure de couche supérieure (9) au moins monocouche est appliquée, en particulier dans laquelle la structure de couche supérieure (9) dépasse de la surface d'appui (6).

3. Procédé selon la revendication 1 ou 2, **caractérisé en ce que** la structure de couche supérieure (9) est repliée sur au moins une face frontale latérale (8) du corps de base (2) avec la couche fonctionnelle (5).

4. Procédé selon l'une quelconque des revendications précédentes, **caractérisé en ce que** la zone repliée ou à replier de la couche fonctionnelle (5) et/ou de la structure de couche supérieure (9) est enlevée et/ou ablatée au niveau du bord, en particulier après le repli.

5. Procédé selon l'une quelconque des revendications précédentes, **caractérisé en ce qu'**un moyen conducteur (10) est appliqué sur la couche fonctionnelle (5) et/ou la structure de couche supérieure (9) au moins par sections, en particulier sur les surfaces de contact exposées (11) de la couche fonctionnelle (5).

6. Procédé selon l'une quelconque des revendications précédentes, **caractérisé en ce que** sur une face inférieure, opposée à la structure de couche supérieure (9), un support est disposé sur le corps de base (2), en particulier est relié au corps de base (2), de préférence chimiquement par un moyen adhésif.

7. Procédé selon l'une quelconque des revendications précédentes, **caractérisé en ce qu'**une couche de protection, de préférence isolante, de préférence une laque de protection et/ou un film, est prévue et/ou disposée entre la couche fonctionnelle (5) et la structure de couche supérieure (9).

8. Elément de recouvrement (1), de préférence destiné à être utilisé comme revêtement de sol, de mur et/ou de plafond, comportant un corps de base (2) et au moins une couche fonctionnelle (5), en particulier fabriqué selon un procédé selon l'une des revendications précédentes, dans lequel la couche fonctionnelle (5) est conçue pour être électriquement conductrice et dans lequel le corps de base (2) comprend sur au moins un bord latéral (3), de préférence sur des bords latéraux opposés (3), de l'élément de recouvrement (1), de préférence des géométries de connexion à rainure et languette correspondantes (4), en particulier sous la forme de connexions à encliquetage,
**caractérisé en ce que**
la couche fonctionnelle (5) est repliée sur au moins une face frontale latérale (8) du corps de base (2) dans la zone de la géométrie de raccordement à rainure et languette (4), de sorte que l'élément de recouvrement (1) est conçu pour établir un contact électrique dans la zone de la géométrie de raccordement à rainure et languette (4).

9. Elément de recouvrement selon la revendication 8, **caractérisé en ce que** la couche fonctionnelle (5) comprend sur la face supérieure, tournée à l'opposé du corps de base (2), une structure de couche supérieure (9) au moins monocouche, en particulier dans laquelle la structure de couche supérieure (9) comprend une feuille décorative, un papier décoratif et/ou une couche d'usure supérieure.

10. Elément de recouvrement selon la revendication 8 ou 9, **caractérisé en ce que** la couche fonctionnelle (5) est mise à nu dans une zone de liaison (12) de la face frontale latérale (8), en particulier à l'extérieur de la géométrie de liaison à rainure et languette (4).

11. Elément de recouvrement selon l'une des revendications précédentes, **caractérisé en ce qu'**un moyen conducteur (10) est prévu au-dessus de la couche fonctionnelle (5) et/ou de la structure de couche supérieure (9) au moins par sections, de préférence dans la zone du contact électrique de l'élément de recouvrement (1).
